# EUROPÄISCHE PATENTSCHRIFT

(11) **EP 3 206 999 B1**
(45) Veröffentlichungstag und Bekanntmachung des Hinweises auf die Patenterteilung: **24.11.2021**
(21) Anmeldenummer: 15800711.2
(22) Anmeldetag: 12.10.2015
(51) Int. Cl.: C03C 17/00, B23K 26/00, C03C 23/00, E06B 9/24

(54) **VERFAHREN ZUR HERSTELLUNG EINES FASSADENELEMENTES AUS GLAS ZUR ABSCHIRMUNG VON LICHT UND LICHTABSCHIRMENDES FASSADENELEMENT**
METHOD FOR PRODUCING A FAÇADE ELEMENT MADE OF GLASS FOR SHIELDING LIGHT, AND LIGHT-SHIELDING FAÇADE ELEMENT
PROCÉDÉ DE FABRICATION D'UN ÉLÉMENT DE FAÇADE EN VERRE DE PROTECTION CONTRE LA LUMIERE ET ÉLÉMENT DE FACADE DE PROTECTION CONTRE LA LUMIERE

(30) Priorität: 13.10.2014 DE 102014014889
(43) Veröffentlichungstag der Anmeldung: 23.08.2017
(73) Patentinhaber: HEGLA boraident GmbH & Co. KG, 37688 Beverungen (DE); Glaswerke Arnold GmbH & Co. KG, 73630 Remshalden (DE)
(72) Erfinder: ARNOLD, Hans-Joachim, 73630 Remshalden (DE); RAINER, Thomas, 38855 Wernigerode (DE)
(74) Vertreter: Fischer, Volker
(86) Internationale Anmeldenummer: PCT/DE2015/000506
(87) Internationale Veröffentlichungsnummer: WO 2016/058579

(56) Entgegenhaltungen:
- EP-A2- 1 925 462
- WO-A1-2015/127919
- AT-U1- 955
- DE-A1- 10 121 660
- DE-A1-102007 013 331
- DE-A1-102008 038 118
- JP-A- 2002 348 146
- US-A1- 2003 044 582
- US-A1- 2012 099 189
- None

## Beschreibung

Die Erfindung betrifft ein Verfahren zur Herstellung eines Fassadenelementes aus Glas zur Abschirmung von Licht und ein lichtabschirmendes Fassadenelement.

Sonnenschutzvorrichtungen für Fassadengläser bestehen entweder aus mit dem Glas nicht unmittelbar verbundenen, externen Vorrichtungen, wie z.B. Abschattungselementen, oder sind als Beschichtung zur Reflektion der Sonnenstrahlung direkt mit dem Glas verbunden.

Der Vorteil externer Sonnenschutzvorrichtungen liegt im Wesentlichen darin, dass zusätzlich zur Reflektion der einfallenden Sonnenstrahlung auch ein definierter Teil der Sonneneinstrahlung in das Gebäude hineingelenkt wird. So ist in der WO 2010/127702 A1 eine Vorrichtung erwähnt, die im Innenraum eines Isolierglasverbundes installiert wird. Sie besteht aus einem perforierten Metallblech, wobei durch die Geometrie der Öffnungen, deren Orientierung und dem Tiefen-/Breitenverhältnis von Öffnung zu Stegdicke der Einfall des Sonnenlichtes in das Gebäude in Abhängigkeit vom Sonnenstand zugelassen wird. Je höher der Sonnenstand, desto besser ist die Beschattung durch dieses perforierte Metallblech. Bei einem niedrigen Sonnenstand (Einfallswinkel) kann das Sonnenlicht ungehindert in das Gebäude eindringen. Dadurch wird der Energiebedarf für die Kühlung, Belüftung und Heizung des Gebäudes effektiver reduziert als durch z.B. Sonnenschutzschichten direkt auf der Fassadenscheibe. Die Nachteile dieser externen Sonnenschutzeinrichtung liegen in der aufwendigen Installation des perforierten Metallbleches in z.B. einem Isolierglasverbund und den hohen Materialkosten.

Sonnenschutzvorrichtungen, die direkt mit dem Fassadenglas verbunden sind, wie z.B. Sonnenschutzschichten gemäß DE 69 707 396 T2, zeichnen sich im Vergleich zu externen Vorrichtungen durch niedrige Fertigungskosten aus, da sie in großflächigen Beschichtungsanlagen mit hohem Flächendurchsatz gefertigt werden.

Ein wesentlicher Nachteil der Sonnenschutzschichten im Vergleich zu den externen Vorrichtungen ist jedoch die fehlende Möglichkeit, die vom Sonnenstand abhängige Lichtlenkung in das Gebäude hinein zu realisieren.

Weiterhin offenbart die WO 2014/135296 A1 eine beschichtete Scheibe mit Fenstern in Form von teilentschichteten Bereichen zur Durchlässigkeit von radiofrequenter Strahlung. Dabei wird durch ein feinmaschiges metallisches Gitter gegenüber einer elektromagnetischen Strahlung im Radiofrequenzbereich, wie FM, AM, UHF, VHF, Radar oder Mikrowellenstrahlung, eine Abschirmwirkung bewirkt.

Analog dazu offenbart die DE 19817712 C1 eine transparente Platte, insbesondere Glasscheibe, mit einer strahlungsreflektierenden Beschichtung, die mindestens eine hochfrequente Strahlung, insbesondere Mikrowellenstrahlung, durchlassendes Fenster mit einer schichtfreien Fläche aufweist.

Aus der EP 1 925 462 A2 ist ein Verfahren zum Erzeugen von Farbinformationen, z.B. Motiven, auf einem Träger, insbesondere aus Glas, bekannt. Offenbart ist es, dass eine keramische Farbe auf eine Seite des Trägers vollflächig aufgetragen wird. Bei diesem Verfahren richtet man nach dem Trocknen der Farbe mindestens einen Hochenergiestrahl auf die Farbe und entfernt oder fixiert damit die Farbe entsprechend der zu erzeugenden Information teilweise.

Die US 2003/044582 A1 offenbart ein Verfahren zum Siebdruck und zur Laserablation verschiedener Arten von Substraten. Das Verfahren kann verwendet werden, um dekoriertes Autoglas mit zusätzlichen Zeichen wie Seriennummern, Strichcodes und dergleichen herzustellen. Das Substrat mit der aufgebrachten Beschichtung kann anschließend formgeformt und / oder wärmegehärtet werden, um ein Endprodukt herzustellen. Die Erfindung stellt auch ein Sieb und ein Siebdruckmuster bereit, die einen Teil enthalten, der anschließend laserablatiert wird, um spezifische Informationen wie eine Serialisierung bereitzustellen. In einer Ausführungsform wird das siebgedruckte und laserablatierte Glassubstrat gebrannt. In einer anderen Ausführungsform können siebgedruckte Muster laserablatiert werden, ohne dass eine anschließende Wärmebehandlung erforderlich ist.

Demgemäß besteht die Aufgabe der vorliegenden Erfindung in der Bereitstellung eines Herstellungsverfahrens für Fassadenelemente aus Glas zur Abschirmung von Licht, das bevorzugt auch zu einer sonnenstandsabhängigen Lichtlenkung in das Gebäude hineinführt.

Diese Aufgabe wird durch ein Verfahren und ein lichtabschirmendes Fassadenelement gemäß den unabhängigen Ansprüchen gelöst. Vorteilhafte Ausgestaltungen sind in den abhängigen Ansprüchen angegeben.

Ein erster Aspekt der Erfindung betrifft ein Verfahren zur Herstellung eines lichtabschirmenden Fassadenelementes aus Glas.

Das erfindungsgemäße Verfahren umfasst dabei die Schritte:
- Bereitstellen eines Substrats aus Glas,
- Abscheiden einer Farbschicht auf dem Substrat,
- lokale Entfernung der Farbschicht durch einen Energieeintrag mittels Laserstrahlung, wobei der Energieeintrag mit einem Einstrahlwinkel im Bereich von 10° bis 40°, bevorzugt von 15° bis 35°, besonders bevorzugt 30°, zum Substrates erfolgt, wobei ein Einstrahlwinkel von 0° eine Senkrechte zur Oberfläche des Substrats bildet,
- nachfolgender Energieeintrag, wobei die auf dem Substrat verbliebene Farbschicht mit dem Substrat verbunden wird.

Dabei ist der Einstrahlwinkel auf die Oberfläche des Substrates bezogen, so dass ein Einstrahlwinkel von 0° eine Senkrechte zur Oberfläche des Substrats bildet.

Bevorzugt werden durch den Energieeintrag mittels Laserstrahlung periodische Strukturen in der Farbschicht ausgebildet, welche beispielsweise als geometrische Flächenelemente wie Kreise und/oder Ellipsen und/oder Rechtecke und/oder Linien und/oder Punkte ausgebildet sind.

Insbesondere das periodische, lokale Entfernen von Schichten mittels Laserstrahlung führt dazu, dass transparente Bereiche in der Beschichtung entstehen, die das Sonnenlicht in das Gebäude hineinpassieren lassen. Die nicht laserbehandelten Reste der Sonnenschutzschicht bilden sonnenlichtabsorbierende und/oder -reflektierende Strukturen auf der Glasoberfläche aus.

Mit Hilfe von Laserstrahlung und geeigneter optischer Laserscanntechnik ist es möglich, Strukturen, wie z.B. Linien, Punkte oder Raster, in nahezu beliebiger Strukturgröße (z.B. Linienbreite = 10 µm bis zu einigen mm) als auch auf den im Architekturglas gewünschten Flächen (z.B. strukturierte Fläche = 10 m²) zu erzeugen.

In einer Ausführungsform der Erfindung werden die durch den Energieeintrag mittels Laserstrahlung erzeugten periodischen Strukturen derart ausgebildet, dass das Verhältnis der Fläche der nichttransparenten Farbschichtbereiche, die nach der Entfernung der Farbschicht verbleiben, und der transparenten, laserstrukturierten Bereiche im Bereich von 0,1 bis 1 liegt. Beispielsweise werden bei einer Farbschichtdicke von 30 µm Lochdurchmesser von 50 µm realisiert.

Überraschenderweise hat sich herausgestellt, dass durch Einwirkung von Laserstrahlung auf Sonnenschutzschichten auf Glas Strukturen hergestellt werden können, die auch den Lichteinfall in das Gebäude in Abhängigkeit vom Sonnenstand regulieren können. Die Untersuchung der Wirkung von gelaserten Strukturen in Sonnenschutzschichten mit Hilfe von winkelabhängigen Transmissionsmessungen zeigten nicht zu erwartende Ergebnisse. In Abhängigkeit des Types der Laserstruktur und der Schichtdicke der Sonnenschutzschicht variierte die Sonnenschutzwirkung von einer vom Sonnenstand unabhängigen, abschattenden Wirkung bis hin zu einer vom Sonnenstand abhängigen Abschattung und Lichtlenkung in das Gebäude hinein.

Damit kann durch die Einstellung des Einstrahlwinkels die vorteilhafte lichtleitende oder lichtabschattende Eigenschaft des lichtabschattenden Fassadenelements individuell angepasst werden. Dies ist insbesondere vorteilhaft, um entsprechende Fassadenelemente den unterschiedlichen Sonneneinstrahlwinkeln im Jahresmittel anzupassen. So können abhängig vom Breitengrad die Fassadenelemente optimal der jeweiligen Sonneneintrahlung angepasst werden.

In einer weiteren Ausführungsform der Erfindung werden die transparenten Bereiche durch eine Relativbewegung zwischen Laserstrahl und Beschichtungsoberfläche erzeugt.

In einer Ausführungsform der Erfindung wird das Substrat derart an einer Laserstrahlungsquelle vorbeigeführt, dass die Laserstrahlung in einem gewünschten Einstrahlwinkel auf die Farbschicht trifft und diese lokal durch einen Energieeintrag entfernt. Die Farbschicht wird im Einstrahlungsbereich durch den Energieeintrag rückstandslos verdampft. Dabei kann zur Realisierung des Einstrahlwinkels der Laserstrahlung entweder das Substrat entsprechend des Winkels zur Laserstrahlungsquelle bewegt werden oder die Laserstrahlungsquelle derart angeordnet werden, dass die Einstrahlung im gewünschten Einstrahlwinkel erfolgt. Bevorzugt ist die Laserstrahlungsquelle beweglich angeordnet und kann entsprechend des gewünschten Einstrahlwinkels im Bereich von 10° bis 40°, bevorzugt von 15° bis 35°, besonders bevorzugt 30°, zum Substrat angeordnet werden, wobei ein Winkel von 0° eine Senkrechte zur Oberfläche des Substrats bildet.

In einer weiteren Ausführungsform der Erfindung wird durch Auswahl der Bestrahlungsparameter, insbesondere von Impulsdauer, Impulsenergie, Fokussierung des Strahles und Relativgeschwindigkeit zwischen Oberfläche der Beschichtung und Laserstrahl, auf die Größe der transparenten Bereiche Einfluss genommen.

In einer weiteren Ausführungsform der Erfindung wird der Laserstrahl durch das Substrat auf die Farbschicht und/oder direkt auf die Farbschicht ausgerichtet.

In einer Ausführungsform der Erfindung ist die Farbschicht ausgewählt aus einer keramischen Farbschicht, einer UV-härtenden Farbschicht oder einer metallischen Beschichtung. Bevorzugt ist die Farbschicht eine keramische Farbschicht.

Ist das Fassadenglas mit Schichten (z.B. vollflächiger Siebdruck mit keramischer Farbe) mit gegenüber dem Glas erhöhten Absorptions- und/oder Reflexionsvermögen auf der Oberfläche versehen, können diese Schichten durch lokale, lasergestützte Erwärmung zum Verdampfen gebracht werden. Damit ist ein periodischer Abtrag der Schichten von der Glasoberfläche möglich, der eine optisch transparente Struktur ausbildet. Wählt man dabei das Verhältnis von entschichteter Fläche zu unentschichteter Fläche so, dass die entschichtete Fläche dominiert, ist die Struktur für einen Betrachter aus einer größeren Entfernung nicht mehr sichtbar. Das Fassadenglas mit der teilweise transparenten Beschichtung ist damit durchsichtig. Das heißt, die Abschattungsstruktur der verbleibenden Stege zwischen den gelaserten Öffnungen stört den Durchblick durch das Fassadenglas nicht.

In einer weiteren Ausführungsform der Erfindung wird die keramische Farbschicht mittels Siebdruckverfahren abgeschieden. Die resultierende Schichtdicke beträgt hierbei zwischen 10 und 100 µm, bevorzugt zwischen 20 und 40 µm.

In einer weiteren Ausführungsform der Erfindung wird die UV-härtende Farbschicht mittels Digitaldruck abgeschieden.

In einer weiteren Ausführungsform der Erfindung wird die metallische Beschichtung durch ein Verfahren ausgewählt aus Sputtern, PVD oder CVD, abgeschieden.

In einer weiteren Ausführungsform der Erfindung erfolgt bei der keramischen Farbschicht nach der lokalen Entfernung der Farbschicht mittels Energieeintrag durch Laserstrahlung eine thermische Behandlung, wobei die Farbschicht mit dem Substrat verbunden wird. Dabei wird das Glas mit der zumindest teilweise transparenten Beschichtung nach der Laserbestrahlung einer Temperaturbehandlung unterzogen, insbesondere um die Beschichtung zu festigen und dauerhaft an die Glasoberfläche zu binden.

In einer weiteren Ausführungsform der Erfindung erfolgt die thermische Behandlung bei Temperaturen zwischen 500 °C bis 750 °C. Überraschenderweise hat sich herausgestellt, dass die durch den Energieeintrag durch Laserstrahlung erzeugten Strukturen in der Farbschicht nach der thermischen Behandlung erhalten bleiben und keinerlei Veränderungen aufweisen. Dadurch ist es möglich, die gewünschte Strukturierung vor der thermischen Behandlung durchzuführen und eine aufwendigere nachfolgende Entfernung der Farbschicht zu vermeiden.

In einer weiteren Ausführungsform der Erfindung erfolgt bei der UV-härtenden Farbschicht nach der lokalen Entfernung der Farbschicht mittels Energieeintrag durch Laserstrahlung ein Energieientrag mittels UV-Strahlung, wobei die Farbschicht mit dem Susbtrat verbunden wird.

In einer weiteren Ausführungsform der Erfindung erfolgt durch lokale Erwärmung der Farbschicht mittels Energieeintrag durch Laserstrahlung ein lokales Verdampfen der Farbschicht eine periodische Strukturierung, wobei ein Punktmuster ausgebildet wird. Beispielsweise beträgt dabei der Durchmesser der Punkte jeweils 50 µm und der Abstand der Mittelpunkte der Punkte beträgt 60 µm.

In einer weiteren Ausführungsform der Erfindung wird der Laserstrahl über der Farbschicht mit einer Geschwindigkeit von 1 m/min bewegt, und an ausgewählten Bestrahlungsorten wird die Verweilzeit der Laserstrahlung auf der Schicht derart realisiert, dass ein Verdampfen der Farbschicht erfolgt.

In einer weiteren Ausführungsform der Erfindung betragen die typischen Bestrahlungszeiten beim Energieeintrag je Punkt 0,5 s bis 2 s. Die Bestrahlungszeiten sind dabei insbesondere von der abgeschiedenen Schichtdicke der Farbschicht und der Energiedichte der eingesetzten Laserstahlquelle abhängig.

Im Gegensatz zum oben genannten Stand der Technik kombiniert das erfindungsgemäße Herstellungsverfahren die Vorteile des kostenarmen Herstellens von Sonnenschutzschichten auf Glas mit den abschattenden und lichtlenkenden Eigenschaften von z.B. perforierten Metallblechen durch den Einsatz von Lasertechnik.

Damit stellt das erfindungsgemäße Verfahren eine Herstellungstechnologie zur Verfügung, die es vorteilhafterweise erlaubt, die lichtlenkenden Eigenschaften mit der abschattenden Wirkung so zu kombinieren, dass eine hohe Sonnenschutzwirkung des Fassadenglases erzielt wird.

Ein weiterer Vorteil des Verfahrens ist die Tatsache, dass die Abschattungsstruktur in einem Fertigungsschritt realisiert wird. Das Verfahren bietet die Möglichkeit, als Ausgangsmaterial Halbzeuge der Architekturglasverarbeitung, wie z.B. vollflächig mit Farbe beschichtete Gläser, zu verwenden. Diese Halbzeuge stehen massenhaft zur Verfügung und besitzen damit niedrige Materialkosten. Dies führt im Vergleich zum Stand der Technik zu deutlich reduzierten Herstellungskosten für die Sonnenschutzeinrichtung.

Ein weiterer Aspekt der Erfindung betrifft die Verwendung des erfindungsgemäßen Verfahrens zur Herstellung eines lichtabschattenden Fassadenelements.

Ein weiterer Aspekt der Erfindung betrifft ein lichabschattendes Fassadenelement.

Das erfindungsgemäße Fassadenelement umfasst dabei
- ein Substrat aus Glas
- sowie eine Farbschicht, welche auf dem Substrat abgeschieden ist, wobei die Farbschicht eine periodische Strukturierung in Form von transparenten und nichttransparenten Bereichen aufweist, wobei das Verhältnis der Fläche der nichttransparenten Farbschichtbereiche und der transparenten Bereiche im Bereich von 0,1 bis 1 liegt und die transparenten Bereiche zu den nichttransparenten Bereichen eine Grenzfläche aufweisen, welche einen Winkel von 10° bis 40°, bevorzugt von 15° bis 35°, besonders bevorzugt 30°, zum Substrat aufweist, wobei ein Winkel von 0° eine Senkrechte zur Oberfläche des Substrats bildet.

Überraschenderweise hat sich herausgestellt, dass durch eine Strukturierung mittels Laserstrahlung mit einem Einstrahlwinkel im Bereich von 10° bis 40°, bevorzugt von 15° bis 35°, besonders bevorzugt 30°, auf dem Substrat transparente und nichttransparente Bereiche mit einer Grenzfläche in Abhängigkeit vom Einstrahlwinkel ausgebildet werden. Diese Grenzfläche weist mithin einen Winkel zwischen transparentem und nichttransparentem Bereich analog dem Einstrahlwinkel der Laserstrahlung auf. Der Winkel der Grenzfläche wiederum ist entscheidend für die abschattenden Eigenschaften des Fassadenelements. Durch die gezielte Einstellung des Winkels der Grenzfläche kann individuell eine Anpassung der abschattenden Eigenschaften des Fassadenelements an dem in Abhängigkeit vom Breitengrad entsprechenden Einstrahlwinkel der Sonnenstrahlung erfolgen.

In einer Ausführungsform der Erfindung ist die Farbschicht ausgewählt aus einer keramischen Farbschicht, einer UV-härtenden Farbschicht oder einer metallischen Beschichtung. Bevorzugt ist die Farbschicht eine keramische Farbschicht. Die Farbschicht wird vorzugsweise nach der Strukturierung mittels Laserstrahlung thermisch behandelt und mit dem Substrat verbunden.

In einer weiteren Ausführungsform der Erfindung sind die periodischen Strukturen in der Farbschicht als geometrische Flächenelemente wie Kreise und/oder Ellipsen und/oder Rechtecke und/oder Linien und/oder Punkte ausgebildet. Beispielsweise kann das periodische Flächenelement ein Rechteck mit 100 µm Länge und 50 µm Breite sein, wobei die Schichtdicke der Farbschicht um 30 µm beträgt.

In einer weiteren Ausführungsform der Erfindung ist das Verhältnis der Fläche der nichttransparenten Farbschichtbereiche, die nach der Entfernung der Farbschicht verbleiben, und Öffnungsgröße der transparenten, laserstrukturierten Bereiche im Bereich um 0,5.

In einer Ausführungsform der Erfindung enthält das Fassadenelement eine zumindest teilweise transparente Farbsschicht, die transparente und auch nichttransparente Bereiche besitzt, wobei
- die Anordnung der transparenten Bereiche so gewählt wurde, dass die sich zwischen den transparenten Bereichen befindlichen, nichttransparenten Bereiche für das menschliche Auge bei Betrachtung aus einer gewissen Distanz nicht sichtbar sind;
- die Lichttransmission durch das Fassadenelement einstellbar ist, wobei über die Schichtdicke der nichttransparenten Bereiche die Lichttransmission durch das Fassadenelement in Abhängigkeit vom Einfallswinkel des Lichtes reguliert wird,
- die transparenten Bereiche durch Laserbestrahlung der Beschichtung realisiert werden, ohne dabei die Glasoberfläche zu schädigen,
- die Form und Größe der transparenten Bereiche über die Parametrierung der Laserstrahlung eingestellt werden und
- die transparenten Bereiche periodisch angeordnet sind.

Bevorzugt wird das erfindungsgemäße Fassadenelement durch das erfindungsgemäße Verfahren hergestellt.

Ein weiterer Aspekt der Erfindung betrifft die Verwendung eines erfindungsgemäßen lichtabschattenden Fassadenelements zur Abschattung von Gebäuden. Das Fassadenelement kann dabei beispielsweise in einem Architekturglasprodukt wie Einscheibensicherheitsglas (ESG), Verbundscheibensicherheitsglas (VSG) oder Isolierglas (ISO) verwendet werden.

Bevorzugte Weiterbildungen der Erfindung ergeben sich aus den Kombinationen der Ansprüche oder einzelner Merkmale davon.

Nachfolgend soll die Erfindung anhand einiger Ausführungsbeispiele und zugehöriger Figuren eingehender erläutert werden. Die Ausführungsbeispiele sollen dabei die Erfindung beschreiben, ohne diese zu beschränken.

Es zeigen in
- Fig. 1: eine schematische Darstellung des Energieeintrags mittels Laserstarhlung in die Farbschicht, in
- Fig. 2: eine schematische Darstellung einer Farbschicht mit Strukturierung, in
- Fig. 3: eine schematische Darstellung der Vorbereitung einer Anordnung eines erfindungsgemäßen Fassadenelements zu einem Isolierglasverbund, in
- Fig. 4: eine schematische Darstellung eines Isolierglasverbundes, umfassend ein erfindungsgemäßes Fassadenelement und in
- Fig. 5: eine schematische Darstellung der Funktion eines erfindungsgemäßen lichtabschattenden Fassadenelements in Abhängigkeit von dem Einstrahlwinkel der Sonne.

In einem ersten Ausführungsbeispiel wird ein Substrat 3 aus Glas mit einer Farbschicht 2 beschichtet, wobei die Abscheidung der Farbschicht 2 mittels Siebdruckverfahren erfolgt. Die reultierende Schichtdicke der Farbschicht 2 beträgt um 30 µm.

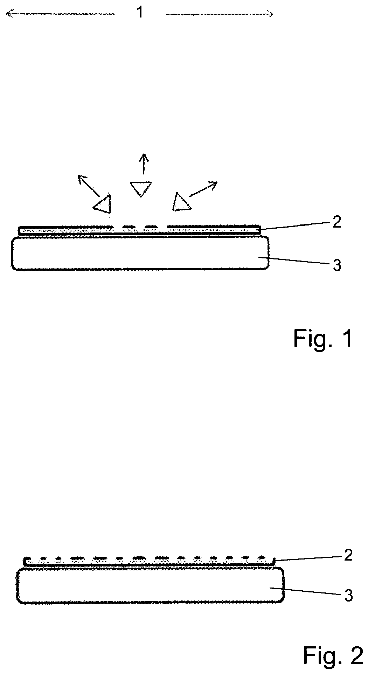

Nachfolgend wird die mit einer Farbschicht 2 versehene Glasscheibe 3 mit einem Energieeintrag mittels Laserstrahlung 1, beispielweise einem NdYAG-Laserstrahl der Wellenlänge 1,064 nm, durch lokale Erwärmung der Farbschicht und dem damit verbundenen lokalen Verdampfen der Farbschicht mit einem Punktmuster periodisch strukturiert. Der Durchmesser der Punkte beträgt jeweils 50 µm und der Abstand der Mittelpunkte der Punkte beträgt 60 µm. Dazu wird der Laserstrahl 1 über der Schicht mit einer Geschwindigkeit von 1m/min bewegt und an ausgewählten Bestrahlungsorten wird die Verweilzeit der Laserstrahlung 1 auf der Schicht so realisiert, dass ein Verdampfen der Farbschicht 2 erfolgt (siehe dazu Fig. 1). Typische Bestrahlungszeiten je Punkt betragen 0,5 s bis 2 s.

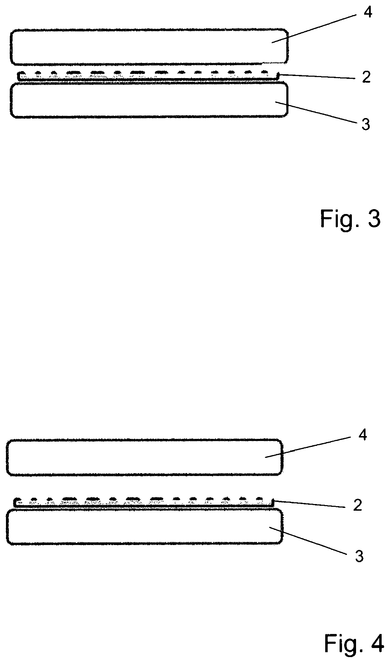

Anschließend wird die so behandelte Glasscheibe 3 (Fig. 2) mit einem zweiten Glas 4 zu einem Isolierglasverbund kombiniert (Fig. 3, Fig. 4).

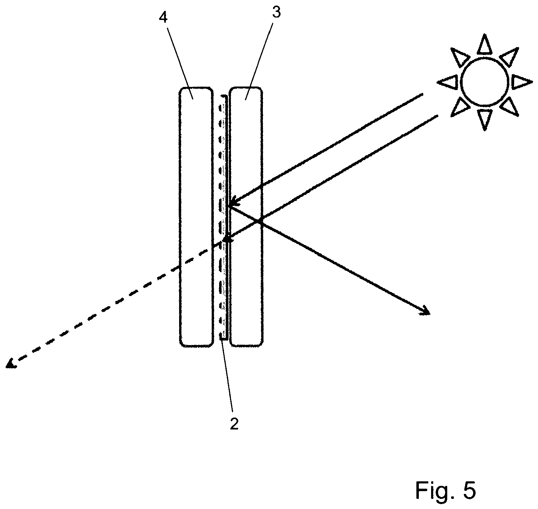

Das Sonnenschutzglas wird nun so in ein Gebäude eingebaut, dass die mit der strukturierten Farbschicht 2 versehene Glasscheibe 3 die Außenseite des Gebäudes bildet (Fig. 5). Das Sonnenlicht wird nun in der Farbschicht 2 absorbiert bzw. reflektiert und in den gelaserten Bereichen ungehindert im sichtbaren Spektralbereich in das Gebäude transmittiert.

### Bezugszeichenliste

- 1 -: Laserstrahlung
- 2 -: Farbschicht
- 3 -: Substrat, Glasscheibe
- 4 -: Glasscheibe

## Patentansprüche

1. Verfahren zur Herstellung eines Fassadenelements aus Glas zur Abschirmung von Licht, umfassend die Schritte:
- Bereitstellen eines Substrats (3) aus Glas,
- Abscheiden einer Farbschicht (2) auf dem Substrat (3),
- lokale Entfernung der Farbschicht (2) durch einen Energieeintrag mittels Laserstrahlung (1), wobei der Energieeintrag mit einem Einstrahlwinkel im Bereich von 10° bis 40°, bevorzugt von 15° bis 35°, besonders bevorzugt 30°, bezogen auf die Oberfläche des Substrats (3) erfolgt, wobei ein Einstrahlwinkel von 0° eine Senkrechte zur Oberfläche des Substrats (3) bildet, und
- nachfolgender Energieeintrag, wobei die auf dem Substrat verbliebene Farbschicht mit dem Substrat verbunden wird.

2. Verfahren nach Anspruch 1, **dadurch gekennzeichnet, dass** die durch den Energieeintrag mittels Laserstrahlung (1) erzeugten periodischen Strukturen derart ausgebildet werden, dass das Verhältnis der Fläche der nichttransparenten Farbschichtbereiche, die nach der Entfernung der Farbschicht (2) verbleiben, und der transparenten, laserstrukturierten Bereiche im Bereich von 0,1 bis 1 liegt.

3. Verfahren nach einem der vorhergehenden Ansprüche, **dadurch gekennzeichnet, dass** die Farbschicht (2) ausgewählt ist aus einer keramischen Farbschicht (2), einer UV-härtenden Farbschicht (2) oder einer metallischen Beschichtung.

4. Verfahren nach Anspruch 3, **dadurch gekennzeichnet, dass** die keramische Farbschicht (2) mittels Siebdruckverfahren abgeschieden wird.

5. Verfahren nach Anspruch **4, dadurch gekennzeichnet, dass** bei der keramischen Farbschicht (2) nach der lokalen Entfernung der Farbschicht (2) mittels Energieeintrag durch Laserstrahlung (1) eine thermische Behandlung erfolgt, wobei die Farbschicht (2) mit dem Susbtrat (3) verbunden wird.

6. Verfahren nach Anspruch 5, **dadurch gekennzeichnet, dass** die thermische Behandlung bei Temperaturen zwischen 500 °C bis 750 °C erfolgt.

7. Verfahren nach Anspruch 1, **dadurch gekennzeichnet, dass** der Laserstrahl (1) durch das Substrat (3) auf die Farbschicht (2) und/oder direkt auf die Farbschicht (2) ausgerichtet wird.

8. Verfahren nach einem der vorherigen Ansprüche, **dadurch gekennzeichnet, dass** die transparenten Bereiche durch eine Relativbewegung zwischen Laserstrahl und Beschichtungsoberfläche erzeugt werden.

9. Lichabschattendes Fassadenelement, umfassend:
- ein Substrat (3) aus Glas
- sowie eine Farbschicht (2), welche auf dem Substrat (3) abgeschieden ist, wobei die Farbschicht (2) eine periodische Strukturierung in Form von transparenten und nichttransparenten Bereichen aufweist, wobei das Verhältnis der Fläche der nichttransparenten Farbschichtbereiche und der transparenten Bereiche im Bereich von 0,1 bis 1 liegt und die transparenten Bereiche zu den nichttransparenten Bereichen eine Grenzfläche aufweisen, welche einen Winkel im Bereich von 10° bis 40°, bevorzugt von 15° bis 35°, besonders bevorzugt 30°, zum Substrat (3) aufweist, wobei ein Winkel von 0° eine Senkrechte zur Oberfläche des Substrats (3) bildet.

10. Fassadenelement nach Anspruch 9, **dadurch gekennzeichnet, dass** die Farbschicht (2) ausgewählt ist aus einer keramischen Farbschicht (2), einer UV-härtenden Farbschicht (2) oder einer metallischen Beschichtung.

11. Verwendung eines Verfahrens nach einem der Ansprüche 1 bis 8 zur Herstellung eines lichtabschattenden Fassadenelements nach einem der Ansprüche 9 oder 10 zur Abschattung von Gebäuden.

## Claims

1. Method for producing a facade element made of glass for shielding from light, comprising the steps of:
- providing a substrate (3) made of glass,
- depositing a colour layer (2) on the substrate (3),
- locally removing the colour layer (2) by energy input by means of laser radiation (1), where the energy input takes place with an incident beam angle in the range from 10° to 40°, preferably from 15° to 35°, more preferably 30°, relative to the surface of the substrate (3), where an incident beam angle of 0° forms a perpendicular to the surface of the substrate (3), and
- subsequently inputting energy, where the colour layer remaining on the substrate is joined to the substrate.

2. Method according to Claim 1, **characterized in that** the periodic structures generated by the energy input by means of laser radiation (1) are designed in such a way that the ratio of the area of the non-transparent colour layer regions which remain after the removal of the colour layer (2) to the area of the transparent, laser-structured regions is in the range from 0.1 to 1.

3. Method according to either of the preceding claims, **characterized in that** the colour layer (2) is selected from a ceramic colour layer (2), a UV-curing colour layer (2) or a metallic coating.

4. Method according to Claim 3, **characterized in that** the ceramic colour layer (2) is deposited by means of a screen-printing technique.

5. Method according to Claim 4, **characterized in that**, in the case of the ceramic colour layer (2), after the local removal of the colour layer (2) by means of energy input through laser radiation (1), there is a thermal treatment, where the colour layer (2) is joined to the substrate (3).

6. Method according to Claim 5, **characterized in that** the thermal treatment takes place at temperatures between 500°C to 570°C.

7. Method according to Claim 1, **characterized in that** the laser beam (1) is oriented through the substrate (3) onto the colour layer (2) and/or directly onto the colour layer (2).

8. Method according to any of the preceding claims, **characterized in that** the transparent regions are generated by a relative movement between laser beam and coating surface.

9. Light-shading facade element comprising:
- a substate (3) made of glass,
- and also a colour layer (2) which is deposited on the substrate (3), where the colour layer (2) has a periodic structuring in the form of transparent and non-transparent regions, where the ratio of the area of the non-transparent colour layer regions to the area of the transparent regions is in the range from 0.1 to 1 and the transparent regions have an interface with the non-transparent regions which has an angle in the range from 10° to 40°, preferably from 15° to 35°, more preferably 30°, to the substrate (3), where an angle of 0° forms a perpendicular to the surface of the substate (3) .

10. Facade element according to Claim 9, **characterized in that** the colour layer (2) is selected from a ceramic colour layer (2), a UV-curing colour layer (2) or a metallic coating.

11. Use of a method according to any of Claims 1 to 8 for producing a light-shading facade element according to any of Claims 9 or 10 for the shading of buildings.

## Revendications

1. Procédé de fabrication d'un élément de façade en verre pour la protection contre la lumière, comprenant les étapes consistant à :
- fournir un substrat (3) en verre,
- déposer une couche de couleur (2) sur le substrat (3),
- enlever localement la couche de couleur (2) par apport d'énergie par rayonnement laser (1), dans lequel l'apport d'énergie est effectué avec un angle d'incidence se situant dans la plage de 10° à 40°, de préférence de 15° à 35°, et de manière particulièrement préférée de 30°, par rapport à la surface du substrat (3), dans lequel un angle d'incidence de 0° forme une perpendiculaire à la surface du substrat (3), et
- effectuer ensuite un apport d'énergie, de sorte que la couche de couleur restant sur le substrat est liée au substrat.

2. Procédé selon la revendication 1, **caractérisé en ce que** les structures périodiques générées par l'apport d'énergie par rayonnement laser (1) sont formées de telle manière que le rapport entre la superficie des zones de couche de couleur non transparentes restant après l'enlèvement de la couche de couleur (2) et celle des zones transparentes structurées par laser se situe dans la plage de 0,1 à 1.

3. Procédé selon l'une quelconque des revendications précédentes, **caractérisé en ce que** la couche de couleur (2) est sélectionnée parmi une couche de couleur céramique (2), une couche de couleur durcissant aux UV (2) ou un revêtement métallique.

4. Procédé selon la revendication 3, **caractérisé en ce que** la couche de couleur céramique (2) est déposée par un procédé d'impression sérigraphique.

5. Procédé selon la revendication 4, **caractérisé en ce qu'**un traitement thermique est effectué sur la couche de couleur céramique (2) après l'enlèvement local de la couche de couleur (2) par apport d'énergie par rayonnement laser (1), de sorte que la couche de couleur (2) est liée au substrat (3).

6. Procédé selon la revendication 5, **caractérisé en ce que** le traitement thermique est effectué à des températures comprises entre 500°C et 750°C.

7. Procédé selon la revendication 1, **caractérisé en ce que** le faisceau laser (1) est dirigé à travers le substrat (3) sur la couche de couleur (2) et/ou directement sur la couche de couleur (2).

8. Procédé selon l'une quelconque des revendications précédentes, **caractérisé en ce que** les zones transparentes sont générées par un mouvement relatif entre le faisceau laser et la surface du revêtement.

9. Élément de façade protégeant contre la lumière comprenant :
- un substrat en verre,
- ainsi qu'une couche de couleur (2) déposée sur le substrat (3), dans lequel la couche de couleur (2) présente une structuration périodique sous la forme de zones transparentes et non transparentes, dans lequel le rapport entre la superficie des zones non transparentes de la couche de couleur et celle des zones transparentes se situe dans la plage de 0,1 à 1 et les zones transparentes ont, par rapport aux zones non transparentes, une interface qui forme un angle se situant dans la plage de 10° à 40°, de préférence de 15° à 35°, et de manière particulièrement préférée de 30°, par rapport au substrat (3), dans lequel un angle de 0° forme une perpendiculaire à la surface du substrat (3).

10. Élément de façade selon la revendication 9, **caractérisé en ce que** la couche de couleur (2) est sélectionnée parmi une couche de couleur céramique (2), une couche de couleur durcissant aux UV (2) ou un revêtement métallique.

11. Utilisation d'un procédé selon l'une quelconque des revendications 1 à 8 pour la fabrication d'un élément de façade protégeant contre la lumière selon l'une quelconque des revendications 9 ou 10 pour la protection contre la lumière des bâtiments.
